# EUROPÄISCHE PATENTANMELDUNG

(11) **EP 1 477 535 A1**
(43) Veröffentlichungstag der Anmeldung: **17.11.2004**
(21) Anmeldenummer: 04008287.7
(22) Anmeldetag: 06.04.2004
(51) Int. Cl.: C09D 5/06

(54) **Verfahren zur Herstellung von Malfarbe**

(30) Priorität: 13.05.2003 DE 10321616
(71) Anmelder: Artur Fischer TIP GmbH & Co. KG, 72178 Waldachtal (DE)
(72) Erfinder: Senator, E.h. Prof. phil.h.c.Dr.-Ing. E.h., 72178 Waldachtal (DE)

(57) **Zusammenfassung**

Zur Herstellung einer Malfarbe schlägt die Erfindung vor, einen eingefärbten oder ungefärbten Spielbaustein, der aus einem aufgeschäumten Stärkematerial besteht, anzufeuchten, zu einer breiigen Konsistenz zu verrühren und Tafelkreide, die nach Wunsch zwischen grob zu Körnern bis fein zu Pulver zerkleinert wird, einzurühren. Die Malfarbe lässt sich beispielsweise mit einem Pinsel oder einem Spachtel auftragen.

## Beschreibung

Die Erfindung betrifft ein Verfahren zur Herstellung von Malfarbe mit den Merkmalen des Oberbegriffs des Anspruchs 1.

Eine Malfarbe ist bekannt aus der DE 101 00 667 A1. Die bekannte Malfarbe besteht an sich aus einem Spielbaustein, der aus einem aufgeschäumten Stärkematerial hergestellt ist. Unter Stärkematerial ist Stärke oder ein stärkehaltiges Material zu verstehen. Das Stärkematerial kann ungefärbt oder es kann ihm vor dem Aufschäumen ein Farbmittel zugesetzt sein, wobei insbesondere ein gesundheitlich unbedenkliches Farbmittel, beispielsweise eine Lebensmittelfarbe, verwendet wird. Das aufgeschäumte Stärkematerial bildet eine Art Malstift, der zum Malen an einem Stirnende angefeuchtet und über eine Unterlage gestrichen wird, wodurch sich Stärkematerial auf die Unterlage abträgt und haften bleibt. Das ursprünglich als Spielbauelement vorgesehene Stärkematerial ist offenbart beispielsweise in der DE 197 03 038 A1, ein Verfahren zu seiner Herstellung offenbart die DE 40 16 597 A1. Ein anderes Verfahren zur Herstellung von Spielbauelementen aus aufgeschäumtem Stärkematerial offenbart die WO 99/11345. Die genannten Druckschriften werden insoweit in Bezug genommen.

Bei der Verwendung der bekannten Spielbauelemente als Malfarben besteht das Problem, dass nur eine begrenzte Anzahl unterschiedlicher Farben verfügbar ist und dass die Herstellung einer größeren Anzahl an Farben den Herstellungs- und Lageraufwand vergrößert.

Der Erfindung liegt daher die Aufgabe zugrunde, ein Verfahren vorzuschlagen, das die Anzahl unterschiedlicher Farben bei Malfarben der eingangs erläuterten Art erhöht.

Diese Aufgabe wird erfindungsgemäß durch die Merkmale des Anspruchs 1 gelöst. Erfindungsgemäß wird einem ungefärbtem oder eingefärbtem Stärkematerial ein Farbmittel zugesetzt, wobei das Stärkematerial insbesondere ein aufgeschäumtes Stärkematerial der eingangs erläuterten Art ist. Das Farbmittel kann das gleiche wie das zum Einfärben dem Stärkematerial vor dem Aufschäumen bereits zugesetzte Farbmittel (selbstverständlich in anderer Farbe oder anderer Farbnuancierung) sein. Zum Aufhellen kann auch ein weißes Farbmittel zugesetzt werden.

Die Erfindung hat den Vorteil, dass sie in einfacher Weise und mit geringem Aufwand die Herstellung einer Malfarbe nahezu beliebiger Farbe aus einer Auswahl an Stärkematerial in wenigen verschiedenen Farben ermöglicht. Grundsätzlich lässt sich nahezu jede gewünschte Farbe aus einem gefärbtem, ungefärbtem oder weißen Stärkematerial herstellen.

In bevorzugter Ausgestaltung wird das Stärkematerial angefeuchtet, insbesondere wird es zu einer breiigen Konsistenz angerührt und es wird das Farbmittel zugesetzt und eingerührt. Abhängig von der Konsistenz des angerührten Stärkematerials lässt sich dieses beispielsweise mit einem Pinsel oder einem Spachtel auftragen. Durch Zusetzen eines flüssigen oder pulverförmigen Farbmittels lässt sich eine glatt auftragbare Konsistenz der Malfarbe erzielen. Wird das Farbmittel in Partikelform oder körnig zugesetzt lässt sich eine raue Farbstruktur der Malfarbe erzielen, die beispielsweise einem Innen- oder Außenverputz eines Hauses ähneln kann.

Eine Ausgestaltung der Erfindung sieht Kreide als Farbmittel vor, die zwischen grob zu Körnern zerkleinert oder fein zu Pulver zerrieben sein kann. Kreide (Tafelkreide) ist preisgünstig, in vielen Farben verfügbar und gesundheitlich unbedenklich.

Die Erfindung wird nachfolgend anhand eines Ausführungsbeispiels näher erläutert. Zur Herstellung einer Malfarbe wird ein aus einem Stärkematerial aufgeschäumter Spielbaustein, wie er beispielsweise in der DE 197 03 038 A1 offenbart ist, mit einer Sprühflasche mit Wasser angefeuchtet, zerkleinert und gerührt. Der Spielbaustein kann eingefärbt oder ungefärbt sein, es können auch verschieden farbig eingefärbte Spielbausteine miteinander verrührt werden. Es wird so viel Wasser eingesprüht, dass eine breiige Konsistenz erzielt wird. Es wird Tafelkreide zerkleinert und eingerührt. Abhängig von der gewünschten Konsistenz der Malfarbe kann die Kreide zwischen grob zerkleinert und fein zerrieben werden. Gewünschtenfalls wird nochmals Wasser zugefügt oder es wird ein Eindicken der Malfarbe abgewartet oder Stärkematerial zugesetzt. Anschließend wird die so erhaltene Malfarbe beispielsweise mit einem Pinsel oder einem Spachtel auf einen Untergrund aufgetragen.

## Patentansprüche

1. Verfahren zur Herstellung von Malfarbe, **dadurch gekennzeichnet, dass** einem Stärkematerial ein Farbmittel zugesetzt wird.

2. Verfahren nach Anspruch 1, **dadurch gekennzeichnet, dass** ein eingefärbtes Stärkematerial verwendet wird.

3. Verfahren nach Anspruch 1, **dadurch gekennzeichnet, dass** das Stärkematerial angefeuchtet wird.

4. Verfahren nach Anspruch 3, **dadurch gekennzeichnet, dass** das Stärkematerial zu einer breiigen Konsistenz angerührt und das Farbmittel zugesetzt wird.

5. Verfahren nach Anspruch 1, **dadurch gekennzeichnet, dass** das Farbmittel Kreide ist.
